(19) Europäisches Patentamt / European Patent Office / Office européen des brevets

(11) **EP 4 258 190 A1**

(12) **EUROPEAN PATENT APPLICATION**
published in accordance with Art. 153(4) EPC

(43) Date of publication:
**11.10.2023 Bulletin 2023/41**

(21) Application number: **21855277.6**

(22) Date of filing: **30.06.2021**

(51) International Patent Classification (IPC):
**G06Q 10/06** (2023.01)

(86) International application number:
**PCT/CN2021/103650**

(87) International publication number:
**WO 2022/033224 (17.02.2022 Gazette 2022/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.11.2020 CN 202011336844**

(71) Applicants:
• **China Nuclear Power Engineering Co., Ltd.**
  **Shenzhen, Guangdong 518124 (CN)**
• **China Nuclear Power Design Company Ltd. (Shenzhen)**
  **Shenzhen, Guangdong 518100 (CN)**
• **China General Nuclear Power Corporation**
  **Shenzhen, Guangdong 518026 (CN)**
• **CGN Power Co., Ltd.**
  **Shenzhen, Guangdong 518026 (CN)**

(72) Inventors:
• **XU, Zhihui**
  **Shenzhen, Guangdong 518124 (CN)**

• **WU, Guanyin**
  **Shenzhen, Guangdong 518124 (CN)**
• **PENG, Huaqing**
  **Shenzhen, Guangdong 518124 (CN)**
• **ZHANG, Jiemei**
  **Shenzhen, Guangdong 518124 (CN)**
• **LIU, Peng**
  **Shenzhen, Guangdong 518124 (CN)**
• **SU, Desong**
  **Shenzhen, Guangdong 518124 (CN)**
• **JIA, Ming**
  **Shenzhen, Guangdong 518124 (CN)**
• **ZHANG, Xuegang**
  **Shenzhen, Guangdong 518124 (CN)**
• **LV, Zhihong**
  **Shenzhen, Guangdong 518124 (CN)**

(74) Representative: **Greaves Brewster LLP**
**Copa House**
**Station Road**
**Cheddar, Somerset BS27 3AH (GB)**

(54) **HUMAN RELIABILITY EVALUATION METHOD AND SYSTEM, AND COMPUTER DEVICE AND STORAGE MEDIUM**

(57) The present invention provides a human reliability evaluation method and system, and a computer device and a storage medium. The human reliability evaluation method includes the steps of: acquiring a task sequence including a diagnosis task sequence and an action task sequence (S201); performing correction processing on the task sequence, to acquire a diagnosis corrected shaping factor corresponding to the diagnosis task sequence and an action corrected shaping factor corresponding to the action task sequence (S202); and evaluating a human error probability according to the corrected performance shaping factor (S203). In the human reliability evaluation method of the present invention, by means of analyzing a task sequence and acquiring a corrected performance shaping factor via correction processing, the problems of qualitative analysis of a performance shaping factor being missing and unclear, qualitative analysis and quantitative analysis not being tightly combined, and credible digital human-machine interface basic data being absent in the prior art are solved, and the problem of an evaluation process involved in the prior art being ambiguous is effectively overcome, thereby effectively improving the credibility of human factor safety evaluation for nuclear power station design.

**(Cont. next page)**

EP 4 258 190 A1

Fig. 2

**Description**

**FIELD OF THE INVENTION**

The present invention generally relates to the technical field of reliability analysis of system engineering and, more particularly, relates to a human reliability evaluation method and system, and computer device and storage medium.

**BACKGROUND OF THE INVENTION**

In the early period of the development of probabilistic safety analysis (PSA), the object of modeling and analysis is the objective entities such as system and device, and the behavior of human and its reliability are seldom considered. Therefore, PSA analysis results cannot measure the actual risk of the entire nuclear power plant accurately and comprehensively, and PSA analysis results are questioned more and more.

In the actual operation of a nuclear power plant, the human actions may correct the failure of certain systems or devices and mitigate their consequences, while may also lead to the failure of certain systems or devices. It can be seen that the behavior of human can directly affect the development of the accident process and consequences. Therefore, human behavior must be taken into account in assessing the overall risk of a nuclear power plant and be incorporated into models for appropriate and adequate assessment, to fully reflect the design safety level of nuclear power plants.

Relevant documents show that, in the probability safety assessment of nuclear power plants, the contribution of human behavior failure probability to the total failure probability of PSA exceeds 50%. The probability safety level of nuclear power plants depends to a large extent on the choices of human actions that have been considered, as well as the failure probability of the human actions. The combination of different devices, systems and human behaviors in the event tree constitutes different accident sequences and scenarios. If it is not sufficiently demonstrated that the human actions considered in PSA cover most of the risks derived from the design, the usefulness of PSA is limited. Similarly, if the failure probability of human actions is not proven sufficiently, PSA results can be highly uncertain.

The object of human reliability analysis is the safety-related important actions performed by human. However, in the prior art, there is no detailed analysis and evaluation of the content and process of the actions performed by human, the results of PSF (performance shaping factor) level selection are given directly. The evaluation process is not transparent, the results of analysis by different human vary greatly, and the low reliability of calculation basis and result cannot be checked and confirmed by a third party. Problems cannot be found and improvement suggestions cannot be made via the human reliability assessment process. Because of the brief analysis process and the lack of detailed qualitative analysis and evaluation, the result is obviously optimistic, and its credibility is greatly reduced.

**SUMMARY OF THE INVENTION**

One object of the present invention is to provide a human reliability evaluation method and system, to solve the problem of low reliability of human safety assessment.

According to one embodiment of the present invention, a human reliability evaluation method includes the steps of:

acquiring a task sequence including a diagnosis task sequence and an action task sequence;

performing correction processing on the task sequence, to acquire a corrected performance shaping factor including a diagnosis corrected shaping factor corresponding to the diagnosis task sequence and an action corrected shaping factor corresponding to the action task sequence; and

evaluating a human error probability according to the corrected performance shaping factor.

According to one aspect of the present invention, the step of acquiring a task sequence includes the steps of:

acquiring human action basic information, wherein the human action basic information includes event description information;

determining a target procedure according to the event description information;

performing table task analysis on the target procedure to obtain the diagnostic task sequence and the action task sequence, wherein each diagnostic task sequence includes at least one diagnostic subtask information and each action task sequence includes at least one action subtask information.

According to one aspect of the present invention, the step of performing table task analysis on the target procedure, to obtain the diagnostic task sequence and the action task sequence includes the steps of:

matching an entry corresponding to the target procedure in a preset database, wherein the entry includes a preset procedure instruction, the preset procedure instruction points to the diagnostic task sequence and the action task sequence corresponding to the preset procedure type;

determining the diagnostic subtask information of the diagnostic task sequence and the action subtask information of the action task sequence in the entry based on the table task, wherein the diagnosis subtask information includes diagnosis operation type and diagnosis operation details of the diagnosis operation type, and the action subtask information includes action operation type and action operation details of the action operation type.

According to one aspect of the present invention, the human basic information includes a total time window, the diagnostic operation details includes the diagnostic operation time of the diagnostic operation type, the action operation details includes the action operation time of the action operation type, and the step of performing correction processing on the task sequence, to acquire a corrected performance shaping factor includes the steps of:

determining the diagnostic time needed for the diagnostic task sequence and the action time needed for the action task sequence according to the diagnostic operation time and the action operation time respectively;

determining a diagnostic available time and an action available time according to the total time window and a preset allocation scheme;

determining a diagnosis available time factor and an action available time factor, based on a preset corrected quantification criterion, the time needed for diagnosis, the time needed for action, the time available for diagnosis, and the time available for action; and

using the diagnosis available time factor and the action available time factor as corrected performance shaping factor.

According to one aspect of the present invention, the step of performing correction processing on the task sequence, to acquire a corrected performance shaping factor includes the steps of:

determining an additional diagnostic factor and an additional action factor based on the preset corrected quantification criteria, the diagnostic operation details and the action operation details; and

using the additional diagnostic factor and the additional action factor as the corrected performance shaping factors.

According to another embodiment of the present invention, a human reliability evaluation system includes:

an acquision module for acquiring a task sequence including a diagnosis task sequence and an action task sequence;

a correction module for performing correction processing on the task sequence, to acquire a corrected performance shaping factor including a diagnosis corrected shaping factor corresponding to the diagnosis task sequence and an action corrected shaping factor corresponding to the action task sequence;

an evaluation module for evaluating a human error probability according to the corrected performance shaping factor.

According to one aspect of the present invention, the acquision module includes:

an acquision unit for acquiring human action basic information, wherein the human action basic information includes event description information;

a procedure unit for determining a target procedure according to the event description information; and

a task analysis unit for performing table task analysis on the target procedure, to obtain the diagnostic task sequence and the action task sequence, wherein each diagnostic task sequence includes at least one diagnostic subtask information, and each action task sequence includes at least one action subtask information.

According to one aspect of the present invention, the task analysis unit includes:

a match subunit for matching an entry corresponding to the target procedure in a preset database, wherein the entry includes a preset procedure instruction, the preset procedure instruction points to the diagnostic task sequence and the action task sequence corresponding to the preset procedure type;

a subtask analysis subunit for determining the diagnostic subtask information of the diagnostic task sequence and the action subtask information of the action task sequence in the entry based on the table task, wherein the diagnosis subtask information includes diagnosis operation type and diagnosis operation details of the diagnosis operation type, and the action subtask information includes action operation type and action operation details of the action operation type.

According to one aspect of the present invention, the human basic information includes a total time window, the diagnostic operation details includes the diagnostic operation time of the diagnostic operation type, the action operation details includes the action operation time of the action operation type, the correction module includes:

a time required unit for determining the diagnostic time needed for the diagnostic task sequence and the action time needed for the action task sequence according to the diagnostic operation time and the action operation time respectively;

an available time unit for determining a diagnostic available time and an action available time according to the total time window and a preset allocation scheme;

an available time factor unit for determining a diagnosis available time factor and an action available time factor, based on a preset corrected quantification criterion, the time needed for diagnosis, the time needed for action, the time available for diagnosis, and the time available for action; and

a first correction factor unit for using the diagnosis available time factor and the action available time factor as corrected performance shaping factor.

According to one aspect of the present invention, the correction module includes:

an additional factor unit for determining an additional diagnostic factor and an additional action factor based on the preset corrected quantification criteria, the diagnostic operation details and the action operation details; and

a second correction factor unit for using the additional diagnostic factor and the additional action factor as the corrected performance shaping factors.

According to yet another embodiment of the present invention, a computer device includes a memory having a computer program stored therein and a processor, the processor executes the computer program to perform the steps of the human reliability evaluation method of the present invention.

According to still another embodiment of the present invention, a computer-readable storage medium is provided. The computer-readable storage medium has computer program stored therein, and the computer program is executed by the processor to perform the steps of the human reliability evaluation method of the present invention.

Compared with the prior art, the embodiment of the present invention has the following advantages. The human reliability evaluation method includes the steps of: acquiring a task sequence including a diagnosis task sequence and an action task sequence, performing correction processing on the task sequence to acquire a diagnosis corrected shaping factor corresponding to the diagnosis task sequence and an action corrected shaping factor corresponding to the action task sequence; and evaluating a human error probability according to the corrected performance shaping factor. By means of analyzing a task sequence and acquiring a corrected performance shaping factor via correction processing, the problems of qualitative analysis of a performance shaping factor being missing and unclear, qualitative analysis and quantitative analysis not being tightly combined, and credible digital human-machine interface basic data being absent in the prior art are solved, and the problem of an evaluation process involved in the prior art being ambiguous is effectively overcome, thereby effectively improving the credibility of human factor safety evaluation for nuclear power station design.

## BRIEF DESCRIPTION OF THE DRAWINGS

In order to explain the technical solution of the embodiments of the present invention clearly, a brief introduction to the drawings required in the embodiments will be described as following. It should be understood that the drawings show only some embodiments of the present invention and, therefore, should not be seen as a limitation to the scope of the present invention. To one ordinary skilled in the art, other relevant drawings can also be obtained without creative work on the basis of the drawings.

Fig. 1 is an illustrative system architecture diagram to which the present invention can be applied;

Fig. 2 is a flow chart of a human reliability evaluation method according to one embodiment of the present invention;

Fig. 3 is a main interface of a human reliability evaluation software system according to one embodiment of the present invention;

Fig. 4 is a block diagram of a human reliability evaluation system according to one embodiment of the present invention; and

Figure 5 is a block diagram of a computer device according to one embodiment of the present invention.

## DETAILED DESCRIPTION OF THE INVENTION

The technical solution of the embodiments of the present invention will be described clearly and completely in view of the attached drawings, in which only part of not all embodiments of the present invention are shown. Based on the embodiments of the present invention as described, other embodiments obtained by one ordinary skilled in the art without creative work fall within the scope of the present invention.

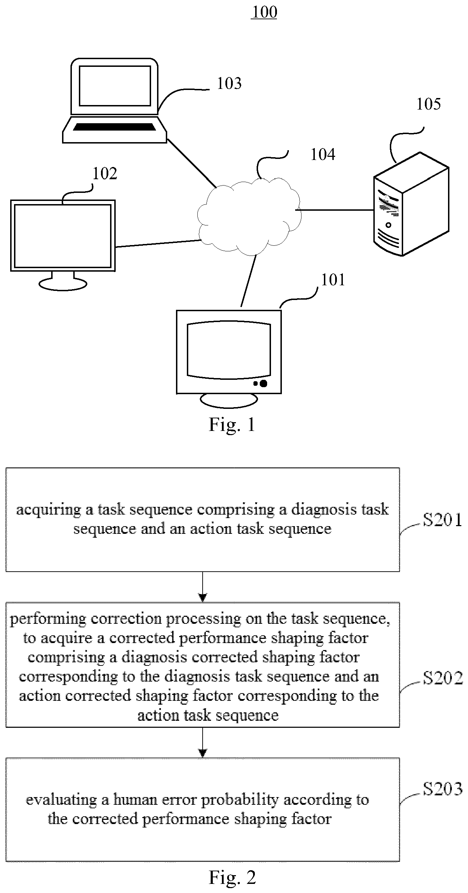

Referring to Fig. 1, a system architecture 100 includes terminal devices 101, 102, 103, a network 104, and a server 105. The network 104 is a medium for providing a communication link between terminal devices 101, 102, 103 and the server 105. The network 104 can include a variety of connection types, such as wired communication links, wireless communication links, or fiber optic cables.

The terminal devices 101, 102, 103 may be a variety of electronic devices which have a display screen and support web browsing, including but not limited to, smart phones, tablets, e-book readers, MP3 (moving picture experts group audio layer 3, MP3) players, MP4 (moving picture experts group audio layer 4) players, laptops and desktop computers.

The server 105 can be a server that provides a variety of services, such as a back-end server that supports pages displayed on the terminal devices 101, 102 and 103.

It should be noted that the human reliability evaluation method provided in one embodiment of the present invention is generally performed by a server/terminal device, and accordingly, the human reliability evaluation system is generally arranged in the server/terminal device.

It should be understood that, the number of terminal devices, networks, and servers in Fig. 1 is only illustrative. Any number of terminal devices, networks, and servers can be used according to actual requirements.

Referring further to Fig. 2, which shows a flow chart of the human reliability evaluation method according to one embodiment of the present invention, the human reliability evaluation method includes the steps of:

S201: acquiring a task sequence comprising a diagnosis task sequence and an action task sequence;

Specifically, the human actions modeled in PSA have corresponding procedures in the actual operation of nuclear power plants, and the human carry out accident response activities strictly according to the above-mentioned documents. Accordingly, the present invention proposes a procedure-based task analysis technique to perform qualitative analysis, i.e. to obtain task analysis according to the task sequence in a procedure.

According to the above analysis, the response behavior of the operator after the accident is divided into diagnosis and action. In practice, the operator handles the accident strictly according to the procedures. Therefore, the response process of the operator can be divided into two parts: the diagnosis according to the procedures and the action according to the procedures. Diagnosis refers to the action of the operator to understand the current situation, plans and objectives, determine the reasonable action according to their own knowledge and experience. Actions include operating devices, arranging devices, starting pumps and valves, and other operations performed in accordance with nuclear power plant procedures.

The task analysis technique based on the actual procedure is the accident sequence and scene which is composed by the combination of human action, device and system automatic action in the PSA event tree, in the corresponding procedure to select the actual operating path of the operator, there may be a number of possible paths in the selection process, the most realistic sequence can be determined on the basis of incident reports, operational experience or simulator validation, or by mutual agreement among organizational risk analysis, operations, and security analysis, or all the sequences are evaluated and the sequence information is uploaded to the human reliability evaluation system.

Furthermore, the basic information of the human action is constructed, in which the basic information of human action is the basic information of response behavior filled in according to the preset event report form mode, including key fields, for example, including event coding, basic event description, initiating event, scenario description, available time, time starting point, scenario analysis. The human reliability analyst fills in the basic information of the response behavior of the specific operator, according to the key field, and uploads the basic information of the human action to the human reliability evaluation system. According to the preset procedures, the basic information of human action is analyzed in order to obtain the task sequence including diagnosis task sequence and action task sequence, the diagnostic task sequence includes a number of diagnostic subtasks of an event diagnostic process, that is, includes a number of diagnostic subtasks information. The diagnosis task sequence includes the subtask name of each diagnosis subtask information, human/location, the time needed for diagnosis subtask, DCS platform, whether the required information is easy to find, the navigation times, whether the required information exists, whether the required information is centralized in one screen. The action task sequence includes a number of action subtasks of an event action process, that is, the action subtask sequence includes a number of action subtask information. The action task sequence includes subtask name of each action subtask information, human/place, time needed for action subtask, DCS platform, whether the information needed is easy to find, the navigation times, whether the information needed is exist, whether the information needed is concentrated in a screen.

In the present embodiment, the basic information of human action is analyzed according to the specific procedures to divide the task into diagnostic task sequence and action task sequence, so that the response behavior process of the operator can be analyzed and evaluated in detail, which provides reasons for subsequent PSF selection, makes the subsequent assessment process more transparent, and helps to find problems and make improvement suggestions in time in the human reliability evaluation process.

S202: performing correction processing on the task sequence, to acquire a corrected performance shaping factor including a diagnosis corrected shaping factor corresponding to the diagnosis task sequence and an action corrected shaping factor corresponding to the action task sequence.

In the present embodiment, the correction process refers to the correction of quantization criteria based on the conservative principle, i.e. the correction based on the SPAR-H principle (Standardized Plant Risk Analysis-Human Reliability Analysis Procedure Principle), in order to adjust the existing PSF, referring to the correction of the performance shaping factor, in order to reflect the conservative principle of human reliability evaluation. In the present application, the available time factor quantization criterion provided by SPAR-H is corrected, and according to the measurement, the corrected quantitative criteria can effectively reflect the conservatism of the human reliability evaluation.

S203: evaluating a human error probability according to the corrected performance shaping factor.

In the present embodiment, the human error probability (HEP) is approximately the sum of the diagnostic error probability and the action execution error probability.

In addition, the diagnostic failure probability of the diagnostic correction shaping factor and the action failure probability of the action correction shaping factor are calculated respectively, and the human error probability is obtained by adding the diagnostic failure probability and the action failure probability.

Further, the SPAR-H method provides nominal human error probabilities (NHEP) for the diagnosis, i.e. human error probabilities that have not yet taken into account the effects of PSF of a particular power plant, where the value of the diagnosis nominal human error probability is 1.0E-2, and the value of the action nominal human error probability is 1.0E-3.

Furthermore, the diagnostic failure probability is the product of the diagnostic correction shaping factor and the diagnostic nominal human error probability value, i.e. the corrected eight diagnostic PSFs are multiplied by the diagnostic nominal human error probability value. Similarly, the action failure probability is the product of the action correction shaping factor and the value of the action nominal failure probability, i.e. the corrected eight action PSFs are multiplied by the action nominal human error probability value. Table 1 shows an example of calculating the probability of human failure, where the probability of diagnosis failure $= 0.01 \times 2 \times 1 \times 1 \times 0.5 \times 1 \times 1 \times 1 \times 1.0E - 2 = 1.0E - 4$, and the probability of action failure $= 1 \times 2 \times 2 \times 1 \times 1 \times 1 \times 1 \times 1 \times 1.0E - 3 = 4.0E - 3$.

Further, the uncertainty of the probability of human error is calculated according to Formula 1 as following:

$$\beta = \frac{\alpha(1-P)}{P} \qquad (1)$$

Wherein p is the human error probability, $\alpha$ is a function of P and can be obtained by querying the table provided by SPAR-H, where $\alpha = 0.49$ and $\beta$ is the uncertainty. Uncertainty refers to the uncertainty of the measured value due to the existence of measurement error. On the other hand, it also shows the reliability of the measurement results, which is an indicator of the quality of the measurement results. The lower the uncertainty, the closer the measurement result is to the true value, the higher the quality, the higher the level, and the higher the use value. The higher the uncertainty, the lower the quality of the measurement results, the lower the level, and the lower the use value. On the one hand, the uncertainty is convenient to assess the reliability. On the other hand, the uncertainty also enhances the comparability between the measured results.

By evaluating the probability and uncertainty of human error, we can judge whether there is an action with failure probability of 1, whether there is an action with failure probability no more than 1.0E-5, and the distribution and boundary of failure probability, in order to check whether the results of the reliability judge of the staff are reasonable.

Table 1 human error probability calculation

| event: OP_FB_SGTR_A-1 | | | |
|---|---|---|---|
| evaluate diagnostic failure probability: $P_d$ | | evaluate action failure probability: $P_a$ | |
| diagnosis PSF | multiplier | action PSF | multiplier |
| available time | 0.01 | available time | 1 |
| stress | 2 | stress | 2 |
| complexity | 1 | complexity | 2 |
| experience/training | 1 | experience/training | 1 |
| procedure | 0.5 | procedure | 1 |
| human-machine efficacy/human-computer interaction | 1 | human-machine efficacy/ human-computer interaction | 1 |
| appropriate responsibility | 1 | appropriate responsibility | 1 |
| work process | 1 | work process | 1 |
| diagnostic failure probability (Pd) | 0.0001 | action failure probability (Pa) | 0.004 |
| adjusted diagnostic failure probability | NA | adjusted action failure probability | NA |
| HEP | $P=Pd+Pa=4.1\text{E-}03$ | | |
| uncertainty | $\alpha=0.49$ | $\beta=\dfrac{\alpha(1-P)}{P}=232.84$ | |

In the present embodiment, the human reliability evaluation method includes the steps of: acquiring a task sequence including a diagnosis task sequence and an action task sequence, performing correction processing on the task sequence to acquire a diagnosis corrected shaping factor corresponding to the diagnosis task sequence and an action corrected shaping factor corresponding to the action task sequence; and evaluating a human error probability according to the corrected performance shaping factor. By means of analyzing a task sequence and acquiring a corrected performance shaping factor via correction processing, the problems of qualitative analysis of a performance shaping factor being missing and unclear, qualitative analysis and quantitative analysis not being tightly combined, and credible digital human-machine interface basic data being absent in the prior art are solved, and the problem of an evaluation process involved in the prior art being ambiguous is effectively overcome, thereby effectively improving the credibility of human factor safety evaluation for nuclear power station design.

In some embodiments of the present invention, the step of acquiring a task sequence in step S201 includes the steps of:

acquiring human action basic information, wherein the human action basic information includes event description information;

determining a target procedure according to the event description information;

performing table task analysis on the target procedure, to obtain the diagnostic task sequence and the action task sequence, wherein each diagnostic task sequence includes at least one diagnostic subtask information, and each action task sequence includes at least one action subtask information.

Specifically, the event description information includes basic event description, power plant status, initial event, scenario description, available time, time starting point and scenario analysis. Table 2 shows the basic information about a human's actions.

Table 2 human action basic information

| event coding | OP_FB_SGTR_A-1 | | |
|---|---|---|---|
| basic event description | fail to manually perform charge and discharge operation successfully | | |
| power plant status | power operation | | |
| initial event | steam generator pipe is broken | | |
| scenario description | In the state of power operation, breakage of the steam generator line occurs, the medium voltage rapid cooling system failed to start automatically, the damaged steam generator were isolated successfully, manual charge and | | |
| | discharge operation is needed. | | |
| available time | 6505s | | |
| time starting point | level 4 alarm appears | | |
| scenario analysis | According to the PSA model, the initial task of the event is to perform the EOP procedure initial orientation, the diagnostic process and the initial accident-oriented process must be performed, to determine the accident occurred and the accident handling procedures should be entered. It can be confirmed that the event includes two parts: diagnostic and action. | | |
| whether diagnosis is involved | Y | whether operation is involved | Y |

Further, the procedures include normal operating procedures (NOP). The normal operating procedures include general operating procedures (GOPs), system operating procedures (SOPs), alarm response procedures (ARPs), abnormal operating procedures (AOPs) and emergency operating procedures (EOPs).

EOP emergency operation procedures are divided into optimal recovery procedure, function recovery procedure and symptom-based (EOP) procedure.

The optimal operation procedures include event-oriented EOP procedures, event-oriented EOP procedures are used to restore reactor shutdown or injection, loss of primary system coolant (LOCA accident) , loss of secondary side coolant (secondary system breach) , response to steam generator heat transfer tube breakage accident, response to LOCA accident outside containment. Functional restoration operating procedures-specific symptom-oriented EOP procedures includes critical safety functional restoration operating procedures and reactor shutdown safety functional restoration operating procedures, for restoration of critical safety functions restoration operation procedures core subcriticality, core cooling, integrity of RCS system, integrity of containment (currently, nuclear power plants generally adopt omen-oriented procedures).

Therefore, according to the event description information and the procedures determining target procedures described above, such as the initial event in Table 2 is a steam generator pipe breakage, the target procedure can be identified as an omen-oriented EOP procedure, and the human action basic information can be divided into diagnostic task sequence and action task sequence according to the characteristics of the target procedure. For example, the task analysis of the diagnostic process in Table 3 is the diagnostic task sequence, and the task analysis of the action process in Table 4 is the action task sequence. The specific diagnostic subtask information and the action subtask information are detailed in step S201, and will not be detailed here again.

Table 3 task analysis of the diagnostic process

| serial number | subtask | human/ location | time needed | DCS platform | navigatio n times | whether the required informatio n exists | whether the required informatio n is easy to find | whether the required information is concentrated in a single image |
|---|---|---|---|---|---|---|---|---|
| 1 | check appearance of L4 alarm | Op1/MCR | 1.1 min | KIC | 0 | yes | yes | yes |
| 2 | check the initial orientation to "Primary Circuit Closed Accident Condition loss of LHA/LHB/LHC" | Op1/MCR | 0.2 min | KIC | 3 | yes | yes | yes |
| 3 | check appearance of jump signal | Op1/MCR | 0.2 min | KIC | 0 | yes | yes | yes |
| 4 | check the initial orientation to "Primary Circuit Closed-Accident Condition-Reduction of Over pressurization" | Op1/MCR | 0.4 min | KIC | 0 | yes | yes | yes |
| 5 | check the initial orientation to "Primary Circuit | Op1/MCR | 1.1 min | KIC | 0 | yes | yes | yes |
| | Closed Accident Condition Feed & Bleed" | | | | | | | |
| total steps | | | | 18 | | | | |
| procedure familiarity | | | | familiar | | | | |
| procedure quality | | | | good | | | | |
| working environment | | | | good | | | | |
| human-machine interface quality | | | | easy to use | | | | |
| total time | | | | 3 min | | | | |

Table 4 task analysis of the action process

| serial number | subtask | human/ location | time needed | DCS platform | navigation times | whether the required information exists | whether the required information is easy to find | whether the required information is concentrated in a single image |
|---|---|---|---|---|---|---|---|---|
| 1 | broadcast to the scene, and ask for an evacuation | Op1/MCR | 1.0min | SCID | 0 | yes | yes | yes |
| 2 | notify the duty officer to start the emergency plan | Op1/MCR | 0.2 min | SCID | 0 | yes | yes | yes |
| 3 | confirm that the reactor has jumped | Op1/MCR | 1.0 min | SCID | 3 | yes | yes | yes |
| 4 | shut down three main pumps and mark the non-functioning normal spray lines | Op1/MCR | 5.7 min | SCID | 1 | yes | yes | yes |
| 5 | call a special program | Op1/MCR | 0.2 min | SCID | 0 | yes | yes | yes |
| 6 | confirm that the charge and discharge conditions have been met | Op1/MCR | 4.8 min | SCID | 1 | yes | yes | yes |
| 7 | start the three medium pressure safety injection pumps | Op 1 /MCR | 2.15 min | SCID | 3 | yes | yes | yes |
| 8 | reset the containment isolation signal | Op1/MCR | 0.25 min | SCID | Manual | yes | yes | yes |
| 9 | open the three | Op1/MCR | 3.2 | SCID | 3 | yes | yes | yes |
| | relief valves to relieve the pressure | | min | | | | | |
| total steps | | | | 76 | | | | |
| procedure familiarity | | | | familiar | | | | |
| procedure quality | | | | good | | | | |
| working environment | | | | good | | | | |
| human-machine interface quality | | | | easy to use | | | | |
| total time | | | | 18.5min | | | | |

In the present embodiment, by obtaining human action basic information including event description information, determining the target procedure according to the event description information, and performing table task analysis on the target procedure, the diagnostic task sequence and the action task sequence are obtained, thereby making the human reliability analysis process clear, comprehensive, full and easy to subsequent check.

In some embodiment of the present invention, the step of performing table task analysis on the target procedure, to obtain the diagnostic task sequence and the action task sequence includes the steps of:

matching an entry corresponding to the target procedure in a preset database, wherein the entry includes a preset procedure instruction, the preset procedure instruction points to the diagnostic task sequence and the action task sequence corresponding to the preset procedure type;

determining the diagnostic subtask information of the diagnostic task sequence and the action subtask information of the action task sequence in the entry based on the table task, wherein the diagnosis subtask information includes diagnosis operation type and diagnosis operation details of the diagnosis operation type, and the action subtask information includes action operation type and action operation details of the action operation type.

In the present embodiment of the present invention, the preset database includes a basic database based on a digital human-machine interface (shown in Table 5) and a basic database of a digital backup table (shown in Table 6). The database is based on the platform of the nuclear power plant digital full-scope simulator, and aims at the actual task execution process statistics of licensed operators. The entries in the database correspond to the procedure instructions of the target procedure in actual operation, thereby allowing the query of the time required for each diagnosis subtask in the procedure, the time required for action corresponding to each action subtask, i.e. the diagnostic operation type of each diagnostic subtask information, the diagnostic time of the diagnostic operation, and the details of diagnostic operation. Action operation type of each action subtask information and action operation time of the action operation type determine the details of action operation, so that the actual operation time needed of the whole procedure or part of the procedure can be calculated.

Furthermore, the table task analysis is performed according to the target procedure, so that the task sequence can be divided into diagnosis task sequence and action task sequence, to determine the complexity in the PSF and the suitability of experience/training, procedures and ergonomics/HMI. In view of the stress/stressors, fitness for duty and work processes, the work adaptability and work processes can be learned further more via interviews and site visits, in order to make a reality-based decision on the PSF level selection, and record the selection reasons in the PSF values table.

In the embodiment of the present invention, an entry corresponding to the target procedure is matched in the preset database. The diagnostic subtask information of the diagnostic task sequence and the action subtask information of the action task sequence in the entry are determined according to the table task. The procedure-based task analysis technique can carry out the qualitative evaluation process effectively, to determine the level of performance shaping factors of digital human-computer interaction operators. In addition, the basic human factor reliability database based on the digital human-machine interface of the nuclear power plant effectively solves the basic data problem restricting the human reliability analysis in the industry, and realizes the combination of qualitative process and quantitative process.

Talbe 5 basic database based on digital human-machine interface

| operation type | operation time (min) | operation type | operation time (min) |
|---|---|---|---|
| call | 0.2 | complex operation of SCID | 0.7 |
| control indoor communication | 0.2 | simple operation of SCID | 0.25 |
| give orders to the site | 1 | complex operation on the screen | 0.3 |
| read instructions | 0.2 | simple operation on the screen | 0.15 |
| ECP operation | 0.15 | complex adjustment operation | 2 |
| parameter comparison | 0.2(simple) | check the judgment | 0.1 (simple) |
| | 0.5(complex) | | 0.2(complex) |
| record | 0.35 | read a program instruction | 0.1 |
| take the procedures | 0.47 | broadcast | 1 |

Talbe 6 basic database based on digital backup table

| operation type | operation time (s) |
|---|---|
| read photon card alarm/parameter | 0.2 |
| operate hard button ON/OFF | 0.3 |
| operate hard button adjustment | 1.1 |
| soft operate an ON/OFF device | 0.4 |
| soft operate adjustment button | 1 |
| ACP to DHP | 0.1 |
| ACP to ECP | 0.1 |

Further, the human basic information includes a total time window, the diagnostic operation details includes the diagnostic operation time of the diagnostic operation type, the action operation details includes the action operation time of the action operation type, the step S202 of performing correction processing on the task sequence, to acquire a corrected performance shaping factor comprises the steps of:

determining the diagnostic time needed for the diagnostic task sequence and the action time needed for the action task sequence according to the diagnostic operation time and the action operation time respectively;

determining a diagnostic available time and an action available time according to the total time window and a preset allocation scheme;

determining a diagnosis available time factor and an action available time factor, based on a preset corrected quantification criterion, the time needed for diagnosis, the time needed for action, the time available for diagnosis, and the time available for action; and

using the diagnosis available time factor and the action available time factor as corrected performance shaping factor.

Specifically, combined with the conservative principles in the human reliability assessment process, the proposed scheme for dividing the total time window in the present invention includes: when the time window is sufficient, when the time window is allocated, more time should be first allocated to the diagnosis as the time available for diagnosis, to provide sufficient time for diagnosis and reduce the diagnosis failure probability. In general, more than twice the time window or more than 30 minutes should be allocated, the remaining time is then allocated to the action, and the failure probability of the action is evaluated based on the remaining time.

Furthermore, the preset allocation scheme includes the post-accident human response process partitioning scheme, which divides the post-accident human response process into the following:

at time T0, an accident occurs in the nuclear power plant;

between time T0 and T1, the accident continued to evolve and develop;

at time T1, the accident was detected and a first clear signal was sent to the operator;

between time T1 and T2, consistent with internationally recognized good practice in the design of nuclear power plant reactors, we believe that no manual intervention is required for at least about 30 minutes from the start of the safety system activation, i.e., the entire time period is used for diagnosis;

at time T2, the intervention was implemented after the operator diagnosed the accident type and determined the operating procedure;

between time T2 and T3, the operator performs the operation procedure and brings the power plant to a controlled state;

at time T3, the power plant reaches a controlled state;

between time T3 and T4, the operator performs the operation or monitoring procedures and brings the plant to a safe shutdown state;

at time T4, the plant reaches a safe shutdown state.

At the time interval of T1-T2-T3, the human task can be divided into diagnostic task sequence and action task sequence according to SPAR-H, and then divided into two periods. At the time interval of T1-T2 period, operators focus on the first clear signal and begin to diagnose according to the procedure, at the time interval of T2-T3 period, operators enter and start to perform the operation procedure according to the diagnosis results , and bring the nuclear power plant to a controlled state.

In the embodiment of the present invention, the quantization criterion of the available time factor provided by SPAR-H is corrected, the corrected quantitative criteria (as shown in Tables 7 and 8) can effectively reflect the conservatism of the human reliability evaluation process.

Table 7 quantization criterion correction of available time PSF factor of diagnosis

| SPAR-H original criterion | corrected criterion | PSF |
| --- | --- | --- |
| 1~2 times, <30min | 2~5 times, <30min | 1 |
| 1~2 times, >30min | 2~5 times, ≥30min | 0.1 |
| >2 times, >30min | >5 times, ≥30min | 0.01 |

Table 8 quantization criterion correction of available time PSF factor of action

| SPAR-H original criterion | corrected criterion | PSF |
| --- | --- | --- |
| ≈1 time | 1~1.3 times | 10 |
| 1~5 times | 1.3~5 times | 1 |
| >5 times | ≥5 times | 0.1 |
| >50 times | ≥50 times | 0.01 |

The time needed for diagnosis is calculated based on the time of the diagnostic operation for each diagnostic operation type, and the time needed for the action of the action task sequence is calculated based on the time of the action operation for each diagnostic action operation type. For example, as shown in Table 2, the available time to complete the OP_FB_SGTR_A-1 event is 6505seconds=108.4 minutes. From the task analysis of the diagnostic process in Table 3, the diagnostic time was 3 minutes. Based on the preset allocation scheme, the diagnostic available time is allocated to 30 minutes, the action available time is 108.4-30=78.4 minutes, and the time needed for action is 18.5 minutes according to the task analysis of the action process in Table 4.

Further, the PSF was determined based on the preset corrected quantification criteria, i.e., based on the diagnostic available time factor and the action available time factor (such as Tables 9 and 10) determined based on Tables 7 and 8.

Table 9 PSF qualitative analysis of diagnosis (corrected)

| PSFs | PSF level | multiplier | Specific reasons for the selection of PSF levels based on the qualitative analysis |
| --- | --- | --- | --- |
| time available | insufficient time | P(failure) = 1 | According to the total time window evaluation, enough time window for diagnosis can be allocated, where the |
| | slightly inadequate time (1~ 2 times, | 10 | |

(continued)

| PSFs | PSF level | multiplier | Specific reasons for the selection of PSF levels based on the qualitative analysis |
|---|---|---|---|
| | <30 min) | | available time for diagnosis is 30 minutes, >5 times, >30min, so the PSF multiplier selects 0.01. |
| | time needed (2~5 times, <30 min) | 1 | |
| | adequate time (2~ 5 times, > 30 min) | 0.1 | |
| | plenty of time (>_ 5 times, > 30 min) | 0.01 ■ | |
| | insufficient information | 1 | |
| stress/stressors | extreme | 5 | The accident belongs to the design basic |
| | high | 2 ■ | accident, the accident consequence |
| | general | 1 | caused by the operation error is serious, |
| | insufficient information | 1 | the operator usually has less actual handling experience, the operator of the main control room will bear the medium stress. The main control room has a good environment. There are no additional distractions. So the PSF multiplier selects 2. - |
| complexity | very complex | 5 | First, the operator has a clear L4 signal prompting him to diagnose the accident; second, the value manager and the operator use paper procedures to diagnose and the value manager can correct the error of the operator; finally, the relevant display and information required for the diagnosis process by task analysis are simple and direct, and the operator only needs to simply judge yes or no, so the PSF multiplier selects 1. |
| | medium complex | 2 | |
| | general | 1 | |
| | obvious diagnosis | 0.1 | |
| | insufficient information | 1 ■ | |
| experience/ training | low | 10 | The operators are all license holders, have undergone regular simulator training, and have more than 6 months of |
| | normal | 1 ■ | |
| | high | 0.5 | |
| | insufficient information | 1 | working experience, so the PSF multiplier selects 1. |

(continued)

| PSFs | PSF level | multiplier | Specific reasons for the selection of PSF levels based on the qualitative analysis |
|---|---|---|---|
| procedure | no programs available | 50 | The procedure belongs to the omen-oriented procedure, and via checking the task analysis, the quality of the procedure is good, so the PSF multiplier selects 0.5. |
| | incomplete | 20 | |
| | available, but not easy to use | 5 | |
| | normal | 1 | |
| | omen-oriented | 0.5 ■ | |
| | insufficient information | 1 | |
| ergonomics/HMI | lack/ misleading | 50 | Through the task analysis, the human interface is normal, so the PSF multiplier selects 1. |
| | bad | 10 | |
| | normal | 1 ■ | |
| | good | 0.5 | |
| | insufficient information | 1 | |
| fitness for duty | not fit | P (failure) = 1 | Through the interview and field observation, the operator is found to have normal working adaptability, so the PSF multiplier selects 1. |
| | lower fitness | 5 | |
| | normal | 1 ■ | |
| | insufficient information | 1 | |
| work processes | bad | 2 | Through interviews, document review and field observation, the working process of the operation team is found to be normal, so the PSF multiplier selects 1. |
| | normal | 1 ■ | |
| | good | 0.8 | |
| | insufficient information | 1 | |

Table 10 PSF qualitative analysis of action (corrected)

| PSFs | PSF level | multiplier | Specific reasons for the selection of PSF levels based on the qualitative analysis |
|---|---|---|---|
| available time | insufficient time | P(failure) =1 | According to the total time window evaluation and time allocation scheme, the action available time is 78.4min, which |
| | available time equal to the time | 10 | |

(continued)

| PSFs | PSF level | multiplier | | Specific reasons for the selection of PSF levels based on the qualitative analysis |
|---|---|---|---|---|
| | needed | | | satisfies the requirement of 1.3 to 5 times, so the PSF multiplier selects 1. |
| | time needed (1.3~5 times) | 1 | ■ | |
| | available time greater than 5 times the time needed | 0.1 | | |
| | available time greater than 50 times the time needed | 0.01 | | |
| | insufficient information | 1 | | |
| stress/stressors | extreme | 5 | | The accident is a design base accident, and the accident consequences of operation error are serious, the operator generally has less practical handling experience, so the operator of the main control room will bear moderate stress; the main control room has a good environment and there is no interference factor. So the PSF multiplier selects 2. |
| | high | 2 | ■ | |
| | general | 1 | | |
| | insufficient information | 1 | | |
| complexity | very complex | 5 | | Task analysis finds the required display, information and operation interface is very Simple and direct, the number of calling picture is not more than 5 times, but the action procedure need 76 steps in total, including broadcasting, communication, parameter check, device operation which has a certain complexity for the operator, so the PSF multiplier selects 2. |
| | medium complex | 2 | ■ | |
| | general | 1 | | |
| | insufficient information | 1 | | |
| experience/ training | low | 3 | | The operators are all license holders, have undergone regular simulator training, and have more than 6 months of working experience, so the PSF multiplier selects |
| | normal | 1 | ■ | |
| | high | 0.5 | | |
| | insufficient | 1 | | |
| | information | | | 1. |
| procedure | no programs available | 50 | | Procedure belongs to the omen-oriented procedure. Via checking the task analysis, the quality of the procedure is normal, so the PSF multiplier selects 1. |
| | incomplete | 20 | | |
| | available, but not easy to use | 5 | | |
| | normal | 1 | ■ | |
| | insufficient information | 1 | | |

(continued)

| PSFs | PSF level | multiplier | Specific reasons for the selection of PSF levels based on the qualitative analysis |
|---|---|---|---|
| ergonomics/HMI | lack/ misleading | 50 | Through checking the task analysis, the human interface is normal, so the PSF multiplier selects 1. |
| | bad | 10 | |
| | normal | 1 ■ | |
| | good | 0.5 | |
| | insufficient information | 1 | |
| fitness for duty | not fit | P (failure) = 1 | Through interview and field observation, the operator is found to have normal working adaptability, so the PSF multiplier selects 1. |
| | lower fitness | 5 | |
| | normal | 1 ■ | |
| | insufficient information | 1 | |
| work process | bad | 5 | Through interviews, document review and field observation, the working process of the operation team is found to be normal, so the PSF multiplier selects 1. |
| | normal | 1 ■ | |
| | good | 0.5 | |
| | insufficient information | 1 | |

In the present embodiment, the diagnostic time required for the diagnostic task sequence and the action time required for the action task sequence are determined according to the diagnostic operation time and the action operation time respectively, the diagnostic available time and the action available time are determine based on the total time window and the preset allocation scheme, the diagnosis available time factor and the action available time factor are determined based on the preset corrected quantization criteria, the time required for diagnosis, the time required for action, the time available for diagnosis and the time available for action, the diagnosis available time factor and the action available time factor are taken as the corrected performance shaping factor. It can be seen that the corrected quantization criterion effectively embodies the conservative principle of human reliability analysis in the quantitative evaluation process, the accuracy of human reliability analysis is improved.

In some embodiment of the present invention, in step S202, the step of performing correction processing on the task sequence, to acquire a corrected performance shaping factor includes the steps of:

determining an additional diagnostic factor and an additional action factor based on the preset corrected quantification criteria, the diagnostic operation details and the action operation details; and

using the additional diagnostic factor and the additional action factor as the corrected performance shaping factors.

Further, the additional diagnostic factors include the diagnostic stress/stressors, diagnostic complexity, diagnostic experience/training, diagnostic procedures, diagnostic ergonomics/HMI, diagnostic fitness for duty, and diagnostic work processes. The additional action factors include stress/stressors, complexity, experience/training, procedures, ergonomics/HMI, fitness for duty, and work processes. The additional diagnostic factors and additional action factors can be determined in the same manner as the diagnostic available time factors and action available time factors described above, and will not be detailed again here.

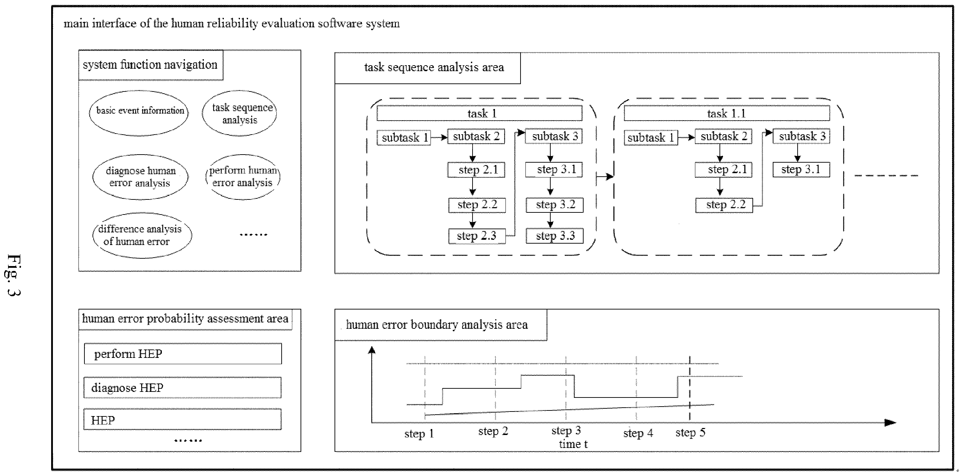

Fig. 3 shows the main interface of the human reliability evaluation software system of the present invention, which includes four parts: system function navigation, task sequence analysis area, human error probability assessment area, human error boundary analysis area. By analyzing the task sequence of the operation procedure, the operation task is divided into diagnosis task and action task, and is divided into several subtasks, to perform quantification and failure probability calculations on the diagnosis task and the action task respectively. The results of the task sequence analysis, the time data needed and the results of the failure probability calculation relating to the error probability calculation are stored in the system database and shown in the main interface of the human reliability evaluation software system.

One ordinary skilled in the art can understand that all or part of the process of realizing the above method embodiment can be completed by computer program to instruct related hardware, and the computer program may be stored in a computer-readable storage medium, and when executed, may include a flow of method embodiments as described above. The storage media can be non-volatile storage media such as disk, CD-ROM, Read-only memory (ROM), or random access memory (RAM).

It should be understood that, although the steps in the flowchart shown in the drawings are shown in the order indicated by the arrows, the steps do not necessarily follow the order indicated by the arrows. Unless explicitly stated in the present invention, these steps are not strictly sequential and can be performed in other order. Furthermore, at least some of the steps in the flowchart can include multiple sub-steps or stages that are not necessarily performed at the same time, instead, the sub-steps or stages can be performed at different times, not necessarily sequentially, but performed alternately with substeps of other steps or at least part of a stage.

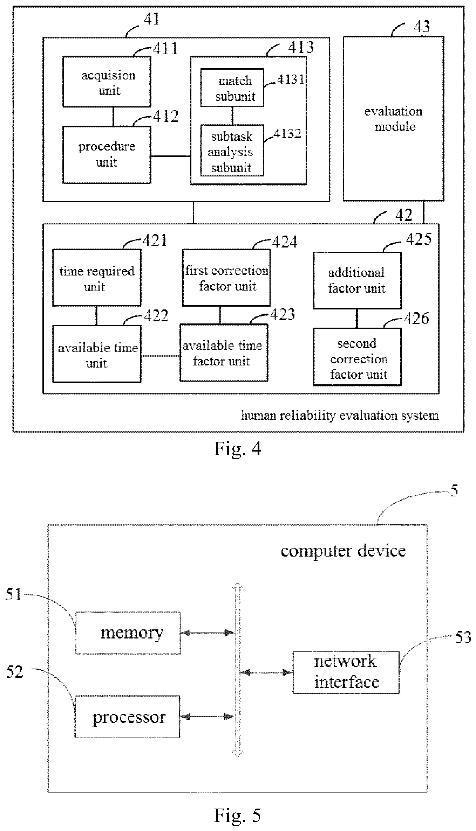

Further referring to Fig. 4, the present invention provides a block diagram of a human reliability evaluation system to implement the human reliability evaluation method shown in Fig. 2 above, the system embodiment corresponds to the method embodiment shown in Fig. 2, and the system can be specifically applied to various electronic devices.

Referring to Fig. 4, a human reliability evaluation system according to one embodiment of the present invention includes:

an acquisition module 41 for acquiring a task sequence comprising a diagnosis task sequence and an action task sequence;

a correction module 42 for performing correction processing on the task sequence, to acquire a corrected performance shaping factor including a diagnosis corrected shaping factor corresponding to the diagnosis task sequence and an action corrected shaping factor corresponding to the action task sequence;

an evaluation module 43 for evaluating a human error probability according to the corrected performance shaping factor.

Optionally, the acquision module 41 includes:

an acquision unit 411 for acquiring human action basic information, wherein the human action basic information comprises event description information;

a procedure unit 412 for determining a target procedure according to the event description information; and

a task analysis unit 413 for performing table task analysis on the target procedure, to obtain the diagnostic task sequence and the action task sequence, wherein each diagnostic task sequence includes at least one diagnostic subtask information, and each action task sequence includes at least one action subtask information.

Optionally, the task analysis unit 413 includes:

a match subunit 4131 for matching an entry corresponding to the target procedure in a preset database, wherein the entry includes a preset procedure instruction, the preset procedure instruction points to the diagnostic task sequence and the action task sequence corresponding to the preset procedure type;

a subtask analysis subunit 4132 for determining the diagnostic subtask information of the diagnostic task sequence and the action subtask information of the action task sequence in the entry based on the table task, wherein the diagnosis subtask information includes diagnosis operation type and diagnosis operation details of the diagnosis operation type, and the action subtask information includes action operation type and action operation details of the action operation type.

Optionally, the human basic information includes a total time window, the diagnostic operation details includes the diagnostic operation time of the diagnostic operation type, the action operation details includes the action operation time of the action operation type, the correction module 42 includes:

a time required unit 421 for determining the diagnostic time needed for the diagnostic task sequence and the action time needed for the action task sequence according to the diagnostic operation time and the action operation time respectively;

an available time unit 422 for determining a diagnostic available time and an action available time according to the total time window and a preset allocation scheme;

an available time factor unit 423 for determining a diagnosis available time factor and an action available time factor, based on a preset corrected quantification criterion, the time needed for diagnosis, the time needed for action, the time available for diagnosis, and the time available for action; and

a first correction factor unit 424 for using the diagnosis available time factor and the action available time factor as corrected performance shaping factor.

Optionally, the correction module 42 includes:

an additional factor unit 425 for determining an additional diagnostic factor and an additional action factor based on the preset corrected quantification criteria, the diagnostic operation details and the action operation details; and
a second correction factor unit 426 for using the additional diagnostic factor and the additional action factor as the corrected performance shaping factors.

In order to solve the above technical problems, one embodiment of the present invention also provides a computer device. Fig. 5 shows a basic structure block diagram of the computer device of the present embodiment.

The computer device 5 includes a memory 51, a processor 52, and a network interface 53 communicating with each other through a system bus. It should be noted that only computer devices with components 51-53 are shown in Fig. 5, but it should be understood that not all of the components shown are required and more or less components can be implemented instead. One ordinary skilled in the art can understand that the computer device here is a kind of device that can carry out numerical calculation and/or information processing automatically according to pre-set or stored instructions. The hardware of the computer device includes, but is not limited to, microprocessors, application specific integrated circuit (ASIC), field-programmable gate array (FPGA), digital signal processor (DSP) and embedded devices.

The computer device can be a desktop computer, a notebook, a PDA, a cloud server, and other computing devices. The computer devices can interact with the user through a keyboard, a mouse, a remote control, a touch plate, a voice-controlled device.

The memory 51 includes at least one type of readable storage medium, the readable storage medium includes a flash memory, a hard disk, a multimedia card, a card-type memory (e.g., SD or D human reliability evaluation memory), a random access memory (RAM), a static random access memory (SRAM), a read-only memory (ROM), an electric-erased programmable read-only memory (EEPROM), a programmable read-only memory (PROM), a magnetic memory, a disk, an optical disk. In some embodiments of the present invention, the memory 51 may be an internal memory unit of the computer device 5, such as a hard disk or memory of the computer device 5. In other embodiments of the present invention, the memory 51 may also be an external storage device of the computer device 5, such as a plug-in hard disk, a smart media card (SMC), a secure digital (SD) card, a flash card. Certainly, the memory 51 may include both an internal memory unit of the computer device 5 and an external memory device. In the present embodiment of the present invention, the memory 51 is typically used to store an operating system and various application software mounted on the computer device 5, such as program code for human reliability evaluation. In addition, the memory 51 can be used for temporarily storing various types of data have been output or to be output.

In some embodiments, the processor 52 may be a central processing unit (CPU), controller, microcontroller, microprocessor, or other data processing chip. The processor 52 is typically used to control the overall operation of the computer device 5. In the present embodiment, the processor 52 is used for running program codes stored in the memory 51 or for processing data, such as program codes for running the human reliability evaluation method.

The network interface 53 may include a wireless network interface or a wired network interface. The network interface 53 is commonly used to establish a communication connection between the computer device 5 and other electronic devices.

One embodiment of the present invention provides a computer-readable storage medium. The computer-readable storage medium stores a human reliability evaluation program. The human reliability evaluation program may be executed by at least one processor to enable the at least one processor to perform steps of the human reliability evaluation method as described above.

In view of the description of the embodiments of the present invention, one ordinary skilled in the art can clearly understand that the method of the present invention can be realized by means of software and the necessary general hardware platform, or hardware, preferably by means of software and the necessary general hardware platform. Based on the understanding, the technical solution of the present invention, in essence, or the portion that contributes to the prior art, may be represented in the form of a software product. The computer software product is stored in a storage medium (such as ROM/RAM, disk, CD-ROM), a number of instructions are included to enable a terminal device (such as a cell phone, computer, server, air conditioner, or network device) to perform the methods described in the embodiments of the present invention.

The above described embodiments are only preferred embodiments of the present invention, and are not intended to limit the scope of the present invention. Any modification, equivalent replacement and improvement within the spirit and principle of the present invention should be included in the protection scope of the present invention.

**Claims**

1. A human reliability evaluation method, **characterized in that** the human reliability evaluation method comprises the steps of:

   (S201) acquiring a task sequence comprising a diagnosis task sequence and an action task sequence;
   (S202) performing correction processing on the task sequence, to acquire a corrected performance shaping factor comprising a diagnosis corrected shaping factor corresponding to the diagnosis task sequence and an action corrected shaping factor corresponding to the action task sequence; and
   (S203) evaluating a human error probability according to the corrected performance shaping factor.

2. The human reliability evaluation method according to claim 1, **characterized in that** the step of acquiring a task sequence comprises the steps of:

   acquiring human action basic information, wherein the human action basic information comprises event description information;
   determining a target procedure according to the event description information;
   performing table task analysis on the target procedure, to obtain the diagnostic task sequence and the action task sequence, wherein each diagnostic task sequence comprises at least one diagnostic subtask information, and each action task sequence comprises at least one action subtask information.

3. The human reliability evaluation method according to claim 2, **characterized in that** the step of performing table task analysis on the target procedure, to obtain the diagnostic task sequence and the action task sequence comprises the steps of:

   matching an entry corresponding to the target procedure in a preset database, wherein the entry comprises a preset procedure instruction, the preset procedure instruction points to the diagnostic task sequence and the action task sequence corresponding to the preset procedure type;
   determining the diagnostic subtask information of the diagnostic task sequence and the action subtask information of the action task sequence in the entry based on the table task, wherein the diagnosis subtask information comprises diagnosis operation type and diagnosis operation details of the diagnosis operation type, and the action subtask information comprises action operation type and action operation details of the action operation type.

4. The human reliability evaluation method according to claim 3, **characterized in that** the human basic information comprises a total time window, the diagnostic operation details comprises the diagnostic operation time of the diagnostic operation type, the action operation details comprises the action operation time of the action operation type, the step of performing correction processing on the task sequence, to acquire a corrected performance shaping factor comprises the steps of:

   determining the diagnostic time needed for the diagnostic task sequence and the action time needed for the action task sequence according to the diagnostic operation time and the action operation time respectively;
   determining a diagnostic available time and an action available time according to the total time window and a preset allocation scheme;
   determining a diagnosis available time factor and an action available time factor, based on a preset corrected quantification criterion, the time needed for diagnosis, the time needed for action, the time available for diagnosis, and the time available for action; and
   using the diagnosis available time factor and the action available time factor as corrected performance shaping factor.

5. The human reliability evaluation method according to claim 4, **characterized in that** the step of performing correction processing on the task sequence, to acquire a corrected performance shaping factor comprises the steps of:

> determining an additional diagnostic factor and an additional action factor based on the preset corrected quantification criteria, the diagnostic operation details and the action operation details; and
> using the additional diagnostic factor and the additional action factor as the corrected performance shaping factors.

6. A human reliability evaluation system, **characterized in that** the human reliability evaluation system comprises:

> an acquision module (41) for acquiring a task sequence comprising a diagnosis task sequence and an action task sequence;
> a correction module (42) for performing correction processing on the task sequence, to acquire a corrected performance shaping factor comprising a diagnosis corrected shaping factor corresponding to the diagnosis task sequence and an action corrected shaping factor corresponding to the action task sequence;
> an evaluation module (43) for evaluating a human error probability according to the corrected performance shaping factor.

7. The human reliability evaluation system according to claim 6, **characterized in that** the acquision module (41) comprises:

> an acquision unit (411) for acquiring human action basic information, wherein the human action basic information comprises event description information;
> a procedure unit (412) for determining a target procedure according to the event description information; and
> a task analysis unit (413) for performing table task analysis on the target procedure, to obtain the diagnostic task sequence and the action task sequence, wherein each diagnostic task sequence comprises at least one diagnostic subtask information, and each action task sequence comprises at least one action subtask information.

8. The human reliability evaluation system according to claim 6, **characterized in that** the task analysis unit (413) comprises:

> a match subunit (4131) for matching an entry corresponding to the target procedure in a preset database, wherein the entry comprises a preset procedure instruction, the preset procedure instruction points to the diagnostic task sequence and the action task sequence corresponding to the preset procedure type;
> a subtask analysis subunit (4132) for determining the diagnostic subtask information of the diagnostic task sequence and the action subtask information of the action task sequence in the entry based on the table task, wherein the diagnosis subtask information comprises diagnosis operation type and diagnosis operation details of the diagnosis operation type, and the action subtask information comprises action operation type and action operation details of the action operation type.

9. A computer device, comprising a memory (51) having a computer program stored therein and a processor (52), the processor (52) executes the computer program to perform the steps of the human reliability evaluation method according to anyone of claims 1 to 5.

10. A computer-readable storage medium, **characterized in that** the computer-readable storage medium has computer program stored therein, the computer program is executed by the processor (52) to perform the steps of the human reliability evaluation method according to anyone of claims 1 to 5.

<u>100</u>

Fig. 1

acquiring a task sequence comprising a diagnosis task sequence and an action task sequence — S201

performing correction processing on the task sequence, to acquire a corrected performance shaping factor comprising a diagnosis corrected shaping factor corresponding to the diagnosis task sequence and an action corrected shaping factor corresponding to the action task sequence — S202

evaluating a human error probability according to the corrected performance shaping factor — S203

Fig. 2

Fig. 3

41

411
acquision unit

412
procedure unit

413
4131
match subunit

4132
subtask analysis subunit

43
evaluation module

42

421
time required unit

422
available time unit

424
first correction factor unit

423
available time factor unit

425
additional factor unit

426
second correction factor unit

human reliability evaluation system

Fig. 4

5

computer device

51
memory

52
processor

53
network interface

Fig. 5

## INTERNATIONAL SEARCH REPORT

| International application No. |
| --- |
| **PCT/CN2021/103650** |

**A. CLASSIFICATION OF SUBJECT MATTER**

G06Q 10/06(2012.01)i

According to International Patent Classification (IPC) or to both national classification and IPC

**B. FIELDS SEARCHED**

Minimum documentation searched (classification system followed by classification symbols)

G06Q

Documentation searched other than minimum documentation to the extent that such documents are included in the fields searched

Electronic data base consulted during the international search (name of data base and, where practicable, search terms used)

CNPAT, WPI, EPODOC, CNKI, IEEE: 人员, 人因, 人误, 因素, 可靠性, 失误, 概率, 任务, 诊断, 动作, 执行, evaluat+, person +, reliability, diagnos+, action, task, error+, correct+, probability, performance, influence, factor+

**C. DOCUMENTS CONSIDERED TO BE RELEVANT**

| Category* | Citation of document, with indication, where appropriate, of the relevant passages | Relevant to claim No. |
| --- | --- | --- |
| PX | CN 112488484 A (CHINA NUCLEAR POWER ENGINEERING CO., LTD. et al.) 12 March 2021 (2021-03-12) claims 1-10 | 1-10 |
| X | CN 109284896 A (BEIHANG UNIVERSITY) 29 January 2019 (2019-01-29) description, paragraphs [007]-[0139], and figures 1-3 | 1-10 |
| A | CN 106067086 A (SHANGHAI NUCLEAR ENGINEERING RESEARCH & DESIGN INSTITUTE) 02 November 2016 (2016-11-02) entire document | 1-10 |
| A | CN 109697558 A (BEIHANG UNIVERSITY) 30 April 2019 (2019-04-30) entire document | 1-10 |
| A | CN 106127372 A (SHANGHAI NUCLEAR ENGINEERING RESEARCH & DESIGN INSTITUTE) 16 November 2016 (2016-11-16) entire document | 1-10 |
| A | CN 109388510 A (CRRC ZHUZHOU INSTITUTE CO., LTD.) 26 February 2019 (2019-02-26) entire document | 1-10 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **15 September 2021** | **30 September 2021** |

| Name and mailing address of the ISA/CN | Authorized officer |
| --- | --- |
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2021/103650** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2006254601 A1 (FUJI PHOTO FILM CO., LTD.) 16 November 2006 (2006-11-16) entire document | 1-10 |

Form PCT/ISA/210 (second sheet) (January 2015)

## INTERNATIONAL SEARCH REPORT
### Information on patent family members

International application No.

**PCT/CN2021/103650**

| Patent document cited in search report | | | Publication date (day/month/year) | Patent family member(s) | | | Publication date (day/month/year) |
|---|---|---|---|---|---|---|---|
| CN | 112488484 | A | 12 March 2021 | None | | | |
| CN | 109284896 | A | 29 January 2019 | None | | | |
| CN | 106067086 | A | 02 November 2016 | None | | | |
| CN | 109697558 | A | 30 April 2019 | None | | | |
| CN | 106127372 | A | 16 November 2016 | None | | | |
| CN | 109388510 | A | 26 February 2019 | None | | | |
| US | 2006254601 | A1 | 16 November 2006 | JP | 2006317988 | A | 24 November 2006 |

Form PCT/ISA/210 (patent family annex) (January 2015)